# EUROPEAN PATENT SPECIFICATION

(11) **EP 4 402 787 B1**
(45) Date of publication and mention of the grant of the patent: **26.08.2026**
(21) Application number: 21794383.6
(22) Date of filing: 19.10.2021
(51) Int. Cl.: H02M 3/335, H02M 1/00, H02M 3/158, H02J 7/35

(54) **INTERCONNECTING A PHOTO-VOLTAIC PANEL TO A BATTERY FOR AN ELECTRIC VEHICLE**
ANSCHLUSS EINES PHOTOVOLTAIKMODULS AN EINE BATTERIE FÜR EIN ELEKTROFAHRZEUG
CONNEXION D'UN PANNEAU PHOTOVOLTAÏQUE À UNE BATTERIE POUR UN VÉHICULE ÉLECTRIQUE

(43) Date of publication of application: 24.07.2024
(73) Proprietor: Huawei Technologies Co., Ltd., Shenzhen, Guangdong 518129 (CN)
(72) Inventor: HE, Zhengyan, 80992 Munich (DE); FACANHA DE OLIVEIRA, Eduardo, 80992 Munich (DE); WIJEKOON, Piniwan, Thiwanka, Bandara, 80992 Munich (DE); HUEMPFNER, Roland, 80992 Munich (DE); GAONA, Daniel, 80992 Munich (DE)
(74) Representative: Maiwald GmbH
(86) International application number: PCT/EP2021/078874
(87) International publication number: WO 2023/066458

(56) References cited:
- WO-A2-2009/140536
- US-A1- 2012 092 903
- US-A1- 2013 328 397
- US-A1- 2015 288 291
- US-A1- 2019 165 665

## Description

### TECHNICAL FIELD

The disclosure relates to the field of photovoltaics (PV), e.g., PV solar roofs, for charging the battery, that is, a high-voltage (HV) battery, during stand-still or driving conditions of an electric vehicle (EV). The disclosure particularly relates to a direct current to direct current (DC-DC) converter arrangement and a corresponding method for interconnecting a photo-voltaic panel to a battery for use in an electric vehicle. More particularly, the disclosure relates to a partial power processing, isolated DC-DC converter and method for Maximum Power-Point Tracking (MPPT) in solar PV application.

### BACKGROUND

PV Solar-roof is gaining attention in the EV sector as an alternative form of charging the battery during stand-still or driving conditions. To interconnect the PV solar-roof to the EV's high-voltage (HV) battery, a DC-DC converter is required. For safety, this converter should be galvanically isolated from the HV battery via a transformer. The transformer also alleviates the large voltage mismatch between the low-voltage PV solar-roof (<25V) and the high-voltage of the EV battery (400-800V). The large voltage difference is detrimental to the converter efficiency; high efficiency is a challenge. The DC converter stage should also be able to regulate the power extracted from the PV panel using a Maximum-Power-Point-Tracking (MPPT) algorithm. To sum up, for PV solar-roof applications, a DC-DC converter is required which should provide MPPT tracking options, large voltage conversion ratio, and galvanic isolation while ensuring high conversion efficiency. Additionally, an interconnection to the EV's low voltage battery is also required in some cases which increases the complexity. US 2012/092903 A1 describes power transfer between independent power ports utilizing a single transformer. WO 2009/140536 A1 describes a method for providing a maximum power point tracking (MPPT) process for an energy generating device. US 2019/165665 A1 describes a voltage converting system with a first power converter converting an input voltage to an intermediate voltage, and a second power converter converting the intermediate voltage to an output voltage at a target voltage level, wherein the second power converter receives both the input voltage and the intermediate voltage from the first power converter.

### SUMMARY

It is an object of this disclosure to provide a DC-DC converter, in particular for PV solar-roof applications, which provides MPPT tracking options, large voltage conversion ratio, and galvanic isolation while ensuring high conversion efficiency.

This object is achieved by the features of the independent claims. Further implementation forms are apparent from the dependent claims, the description and the figures.

The disclosure introduces the use of isolated partial-power DC-DC topologies for EV's solar-roof application. The disclosed solutions offer high efficiency MPPT tracking capability, large voltage conversion ratio, and a three-port connection. Compared to conventional topologies, the disclosed solution offers a simpler structure and control, requires a lower component count, and a simpler two-winding transformer. The operation of the system is optimized for efficiency and power density as the power stages are operated at their optimum conditions (for instance, with a Series Resonant Converter (SRC) operating at constant frequency and constant duty-cycle). The topology, its operation, and MPPT capability are detailed hereinafter.

Key aspects of this disclosure are an isolated partial power DC-DC converter topology interconnecting PV panel, EV low-voltage battery and high-voltage battery; and a method for the above DC-DC converter to operate and regulate the PV power by an MPPT algorithm with charging variable voltages at the battery end.

The disclosure particularly relates to the use of special isolated partial-power DC-DC topologies for solar-roof application. The partial-power DC/DC converter can be used as an MPPT tracker to extract maximum power from the PV panels for charging the EV battery. The disclosed solutions described hereinafter offer high efficiency MPPT tracking capability, large voltage conversion ratio and a three-port connection. The benefits are as follows:
Partial-power processing. As a result, the efficiency of the system can be increased. Higher efficiency is directly correlated to higher power-density and lower thermal management requirements.

Galvanic isolation, voltage regulation, and power transfer can be achieved with the use of a single transformer and low component count. The solution can be ideally applied to EV's solar-roof applications where isolation is required and where a large voltage difference exists between the input (PV panel) and output (battery) voltages.

MPPT regulation can be implemented with different control strategies. For every case, the optimum power of the PV panel can be extracted at all times and delivered to a LV or/and HV battery. MPPT regulation executed by the partial-power non-isolated converter allows the resonant converter (SRC) to operate with constant frequency and duty-cycle. As a result, the transformer size can be reduced.

In order to describe the disclosure in detail, the following terms, abbreviations and notations will be used:
- EV: electric vehicle
- PV: photo-voltaic
- HV: high-voltage, in this disclosure between 400 V and 800 V, for example
- LV: low-voltage, in this disclosure below 25 V, for example
- MPPT: Maximum-Power-Point-Tracking (algorithm or scheme)
- DC: direct current
- AC: alternating current
- PWM: Pulse Width Modulation
- SRC: series resonant converter
In this disclosure, converters, i.e., power converters are described. Power converters, also referred to as power electronics converters, are applied for converting electric energy from one form to another, such as converting between DC and DC, e.g., between low voltage DC and high or medium voltage DC or between AC and DC. This disclosure, however, focuses on DC-DC power converters. Power converter can also change the voltage or frequency or some combination of these. Power electronics converter are based on power electronics switches that can be actively controlled by applying ON/OFF logic (i.e., PWM operation, usually commanded by a closed loop control algorithm).

In this disclosure, full-power converters and partial power converters are described. Full-power and partial-power topologies can be used for the interconnection of PV systems to batteries.

Full-power converters process the entire power from the PV panel. As a result, higher power losses and lower efficiency are expected. Full-power topologies can be double-stage with a first stage in charge of the MPPT tracking and a second one interfacing with the load. Single-stage solutions can also be implemented. Of particular relevance are three-port single-stage full-power converters. These converters can feed energy to two loads (HV and LV battery, for instance) which makes them more suitable for EV's solar-roof applications. Nonetheless, they suffer from the lower efficiency as they need to process the entire power from the PV panel.

In Partial-power topologies, a portion of the power is fed directly from the PV-panel to the load while another portion is first processed by an intermediate converter. The portion of power processed by the partial converter would depend on ratio between the overall input and output voltages. If the input and output voltages match, the partial-power converter does not process any power. The power, however, increases as the voltage gain departs from 1. Since only a portion of the power is regulated by the intermediate DC-DC converter, power losses are lower, yielding higher overall efficiency. Most of the partial-power topologies are non-isolated. For isolation, a transformer can be added after the converter to reduce the input/output voltage ratio and to comply with safety regulations (CM currents, touch currents, etc.). However, this increases the complexity of the system as well as the component count. In EV's solar-roof applications, isolated topologies are preferred to comply with touch-currents and common-mode requirements related with electrical safety.

According to a first aspect, the disclosure relates to a direct-current to direct-current, DC-DC, converter arrangement for interconnecting a photo-voltaic panel to a battery for an electric vehicle, the DC-DC converter arrangement comprising: a first terminal for connecting the DC-DC converter arrangement to the photo-voltaic panel, the first terminal being configured to provide a first DC voltage; a second terminal for connecting the DC-DC converter arrangement to the battery, the second terminal being configured to provide a second DC voltage; a first DC-DC converter stage configured to convert the first DC voltage into an intermediate DC voltage, wherein the first DC-DC converter stage is a non-isolated converter; a second DC-DC converter stage configured to convert the first DC voltage and the intermediate DC voltage into the second DC voltage for loading the battery with a full power provided by the photo-voltaic panel, wherein the second DC-DC converter stage is configured to galvanically isolate the second DC voltage from the first DC voltage and the intermediate DC voltage.

This DC-DC converter arrangement can be advantageously applied for PV solar-roof applications. The DC-DC converter arrangement provides MPPT tracking options, large voltage conversion ratio, and galvanic isolation while ensuring high conversion efficiency.

The DC-DC converter arrangement provides partial-power processing. As a result, the efficiency of the system can be increased. Higher efficiency is directly correlated to higher power-density and lower thermal management requirements.

The solution can be ideally applied to EV's solar-roof applications where isolation is required and where a large voltage difference exists between the input (PV panel) and output (battery) voltages.

The DC-DC converter arrangement allows MPPT regulation that can be advantageously implemented with different control strategies. For every case, the optimum power of the PV panel can be extracted at all times and delivered to a LV or/and HV battery.

The first terminal is configured to provide the first DC voltage with respect to a first reference terminal; and the second terminal is configured to provide the second DC voltage with respect to a second reference terminal, the second reference terminal being galvanically isolated from the first reference terminal.

In this DC-DC converter arrangement, galvanic isolation, voltage regulation, and power transfer can be advantageously achieved with the use of a single transformer and low component count.

The first DC-DC converter stage comprises a first converter terminal connected to the first terminal, and a second converter terminal, the first DC-DC converter stage being configured to provide the intermediate DC voltage at the second converter terminal with respect to the first reference terminal.

This provides the advantage that the DC-DC converter arrangement can be separated into two stages, where the first DC-DC converter stage does not require galvanic isolation while the second DC-DC converter stage provides galvanic isolation.

The second DC-DC converter stage comprises: a first converter terminal connected to the first terminal; a second converter terminal connected to the second converter terminal of the first DC-DC converter stage; a third converter terminal connected to the second terminal; a fourth converter terminal connected to the first reference terminal; and a fifth converter terminal connected to the second reference terminal; and the second DC-DC converter stage is configured to provide the second DC voltage between the third converter terminal and the second reference terminal.

This provides the advantage that a variety of different designs can be implemented for realizing the second DC-DC converter stage, i.e. the isolating converter, hence improving design flexibility.

In an exemplary implementation of the DC-DC converter arrangement, the DC-DC converter arrangement may further comprise a low-pass filter coupled between the first terminal and the second DC-DC converter stage. The low-pass filter is configured to suppress current harmonics of the photo-voltaic panel.

This provides the advantage that current harmonics of the PV-panel can be advantageously suppressed without deteriorating the functionality of the DC-DC converter arrangement. I.e., the DC-DC converter arrangement can be coupled to non-ideal PV-panels without a significant decrease in performance.

The second DC-DC converter stage comprises: a full-bridge inverter, the full-bridge inverter comprising a first inverter leg connected between the first converter terminal and the fourth converter terminal; and a second inverter leg connected between the second converter terminal and the fourth converter terminal; and a rectifier connected to the second terminal and to the second reference terminal.

This provides the advantage that MPPT regulation executed by the first DC-DC converter stage, i.e., the non-isolated converter stage, allows the second DC-DC converter stage, i.e., the resonant converter stage to operate with constant frequency and duty-cycle. As a result, the accuracy requirements of the full-bridge inverter can be relaxed.

In an exemplary implementation of the DC-DC converter arrangement, the second DC-DC converter stage is configured to combine the first DC voltage and the intermediate DC voltage for conversion into the second DC voltage.

This provides the advantage that the first DC-DC converter stage can advantageously process the partial power provided by the photo-voltaic panel while the second DC-DC converter stage can provide the full power to the HV battery.

In an exemplary implementation of the DC-DC converter arrangement, the first DC-DC converter stage comprises at least one DC-DC converter of any family, in particular a buck-converter, a boost-converter or a buck-boost converter, for conversion of the first DC voltage.

This provides the advantage of design flexibility where a variety of different DC-DC converter designs can be implemented depending on the specific design requirements.

In an exemplary implementation of the DC-DC converter arrangement, the DC-DC converter arrangement comprises: a controller configured to provide a respective control signal for controlling the first DC-DC converter stage and the second DC-DC converter stage.

This provides the advantage that the controller can flexibly implement all required control strategies depending on specific requirements. For example, different MPPT algorithms can be implemented in software and executed by the controller.

In an exemplary implementation of the DC-DC converter arrangement, the controller is configured to control the first DC-DC converter stage based on a Maximum Power Point Tracking scheme.

This provides the advantage that the partial-power DC/DC converter can be used as an MPPT tracker to extract maximum power from the PV panels for charging the EV battery. Such a solution offers high efficiency MPPT tracking capability, large voltage conversion ratio and a three-port connection.

In an exemplary implementation of the DC-DC converter arrangement, the second DC-DC converter stage comprises: a transformer comprising a primary side and a secondary side, wherein the primary side of the transformer is coupled to the full-bridge inverter and the secondary side of the transformer is coupled to the rectifier.

This provides the advantage that the transformer can be used as basic component for galvanically decoupling. High voltage side can thus be decoupled from low voltage side.

In an exemplary implementation of the DC-DC converter arrangement, the second DC-DC converter stage comprises a resonant converter.

By using such a resonant converter, the operation of the system can be optimized for efficiency and power density as the power stages can be operated at their optimum conditions. For instance, a Series Resonant Converter (SRC) operating at constant frequency and constant duty-cycle can be advantageously used as resonant converter.

In an exemplary implementation of the DC-DC converter arrangement, the second DC-DC converter stage comprises: a primary resonant tank coupled between the full-bridge inverter and the primary side of the transformer.

This allows flexible design for the DC-DC converter arrangement, since the second DC-DC converter stage requires only a primary resonant tank without a secondary resonant tank. Alternatively, a primary and secondary resonant tank can be implemented but this is optional: The second DC-DC converter stage may optionally comprise a secondary resonant tank coupled between the secondary side of the transformer and the rectifier.

In an exemplary implementation of the DC-DC converter arrangement, the full-bridge inverter is configured to operate at a fixed duty cycle and at a fixed frequency corresponding to a resonant frequency of the primary resonant tank.

This provides the advantage of easy construction of the full-bridge inverter with relaxed design requirements for this inverter, in particular if the DC-DC converter arrangement has only a primary resonant tank and no secondary resonant tank.

According to the invention, the DC-DC converter arrangement comprises an energy storage coupled to the first DC-DC converter stage, the energy storage being configured to store energy based on the intermediate DC voltage, wherein the energy stored in the energy storage corresponds to a partial power provided by the photo-voltaic panel. The battery and the energy storage and the photo-voltaic panel are parts of the electric vehicle.

This provides the advantage that the energy storage can store energy based on the partial power provided by the PV panel.

In an exemplary implementation of the DC-DC converter arrangement, the energy storage comprises a second battery for the electric vehicle, the second battery having a lower nominal voltage than a nominal voltage of the battery.

The second battery can be a LV battery while the main battery can be HV battery.

This provides the advantage that both, a HV battery and a LV battery can be charged by using the DC-DC converter arrangement.

According to a second aspect, the disclosure relates to a method for interconnecting a photo-voltaic panel to a battery for an electric vehicle by using a direct current to direct current, DC-DC, converter arrangement comprising a first terminal, a second terminal, a first DC-DC converter stage, and a second DC-DC converter stage, the method comprising: connecting the photo-voltaic panel to the first terminal for providing a first DC voltage at the first terminal; connecting the battery to the second terminal for providing a second DC voltage at the second terminal; converting the first DC voltage into an intermediate DC voltage by the first DC-DC converter stage, wherein the first DC-DC converter stage is a non-isolated converter; converting the first DC voltage and the intermediate DC voltage into the second DC voltage by the second DC-DC converter stage for loading the battery with a full power provided by the photo-voltaic panel, wherein the second DC voltage is galvanically isolated from the first DC voltage and the intermediate DC voltage by the second DC-DC converter stage.

The first terminal provides the first DC voltage with respect to a first reference terminal; and the second terminal provides the second DC voltage with respect to a second reference terminal, the second reference terminal being galvanically isolated from the first reference terminal.

The first DC-DC converter stage comprises a first converter terminal connected to the first terminal, and a second converter terminal, the first DC-DC converter stage being configured to provide the intermediate DC voltage at the second converter terminal with respect to the first reference terminal.

The second DC-DC converter stage comprises: a first converter terminal connected to the first terminal; a second converter terminal connected to the second converter terminal of the first DC-DC converter stage; a third converter terminal connected to the second terminal; a fourth converter terminal connected to the first reference terminal; and a fifth converter terminal connected to the second reference terminal; and the second DC-DC converter stage is configured to provide the second DC voltage between the third converter terminal and the second reference terminal.

The second DC-DC converter stage comprises: a full-bridge inverter, the full-bridge inverter comprising a first inverter leg connected between the first converter terminal and the fourth converter terminal; and a second inverter leg connected between the second converter terminal and the fourth converter terminal; and a rectifier connected to the second terminal and to the second reference terminal.

This method can be advantageously applied for PV solar-roof applications. The method provides MPPT tracking options, large voltage conversion ratio, and galvanic isolation while ensuring high conversion efficiency.

The method provides a high-efficient interconnection of a photo-voltaic panel to a battery for an electric vehicle and thus high efficient charging of an electric vehicle.

According to the invention, the method comprises: storing energy in an energy storage of the DC-DC converter arrangement based on the intermediate DC voltage, wherein the energy stored in the energy storage corresponds to a partial power provided by the photo-voltaic panel. The battery and the energy storage and the photo-voltaic panel are parts of the electric vehicle.

This provides the advantage that the method can be used for storing energy in the energy storage based on the partial power provided by the PV panel.

### BRIEF DESCRIPTION OF THE DRAWINGS

Further embodiments of the disclosure will be described with respect to the following figures, in which:
Figure 1 shows a circuit diagram of a photo-voltaic charging system 10 with a DC-DC converter arrangement 100 according to the disclosure;
Figure 2 shows a circuit diagram of a photo-voltaic charging system 10 with a DC-DC converter arrangement 100a according a first embodiment;
Figure 3 shows a circuit diagram of a photo-voltaic charging system 10 with a DC-DC converter arrangement 100b according a second embodiment;
Figure 4 shows a circuit diagram of a photo-voltaic charging system 10 with a DC-DC converter arrangement 100c according a third embodiment;
Figure 5 shows a circuit diagram of a photo-voltaic charging system 10 with a DC-DC converter arrangement 100d according a fourth embodiment;
Figure 6 shows a schematic diagram illustrating a method for interconnecting a PV panel to a battery for an electric vehicle according the disclosure;
Figure 7 shows a diagram 700 illustrating partial power processing as a function of the voltage gain of the non-isolated DC-DC converter;
Figure 8 shows a circuit diagram of a photo-voltaic charging system 10 with a DC-DC converter arrangement 100a according the first embodiment;
Figure 9a shows an exemplary control diagram of an MPPT scheme 900 applied to the PV-panel voltage;
Figures 9b, 9c and 9d show performance diagrams illustrating performance of the MPPT scheme 900 applied to the PV-panel voltage;
Figure 10a shows an exemplary control diagram of an MPPT scheme 1000 applied to the current of the non-isolated DC-DC converter;
Figures 10b, 10c and 10d show performance diagrams illustrating performance of the MPPT scheme 1000 applied to the current of the non-isolated DC-DC converter;
Figure 11a shows an exemplary control diagram of another MPPT scheme 1100 applied to the current of the non-isolated DC-DC converter;
Figures 11b, 11c and 11d show performance diagrams illustrating performance of the MPPT scheme 1100 applied to the current of the non-isolated DC-DC converter;
Figures 12a and 12b show performance diagrams illustrating performance of the photo-voltaic charging system 10 without input filtering;
Figures 12c and 12d show performance diagrams illustrating performance of the photo-voltaic charging system 10 with input filtering; and
Figures 13a, 13b, 13c and 13d show current and voltage waveforms for different points within the DC-DC converter arrangement 100a.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the disclosure. The following detailed description, therefore, is not to be taken in a limiting sense, and the scope of the disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

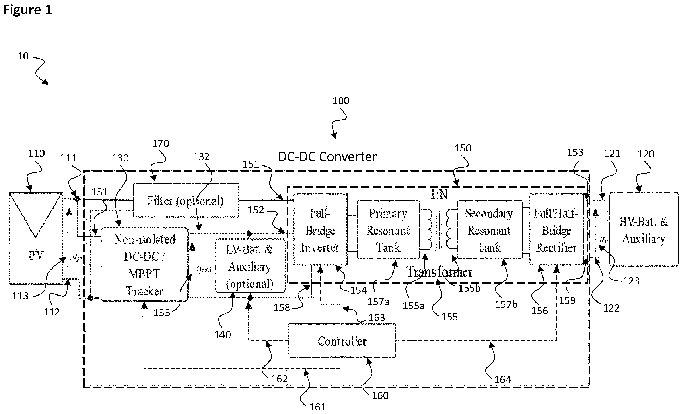

Figure 1 shows a circuit diagram of a photo-voltaic charging system 10 with a DC-DC converter arrangement 100 according to the disclosure.

The DC-DC converter arrangement 100 can be used for interconnecting a photo-voltaic panel 110 to a battery 120 for an electric vehicle.

The DC-DC converter arrangement 100 comprises a first terminal 111 for connecting the DC-DC converter arrangement 100 to the photo-voltaic panel 110. The first terminal 111 is configured to provide a first DC voltage 113.

The DC-DC converter arrangement 100 comprises a second terminal 121 for connecting the DC-DC converter arrangement 100 to the battery 120. The second terminal 121 is configured to provide a second DC voltage 123.

The DC-DC converter arrangement 100 comprises a first DC-DC converter stage 130 configured to convert the first DC voltage 113 into an intermediate DC voltage 135.

The DC-DC converter arrangement 100 comprises a second DC-DC converter stage 150 configured to convert the first DC voltage 113 and the intermediate DC voltage 135 into the second DC voltage 123 for loading the battery 120 with a full power provided by the photo-voltaic panel 110.

The second DC-DC converter stage 150 is configured to galvanically isolate the second DC voltage 123 from the first DC voltage 113 and the intermediate DC voltage 135.

The first terminal 111 is configured to provide the first DC voltage 113 with respect to a first reference terminal 112.

The second terminal 121 is configured to provide the second DC voltage 123 with respect to a second reference terminal 122. The second reference terminal 122 is galvanically isolated from the first reference terminal 112.

The first DC-DC converter stage 130 comprises a first converter terminal 131 connected to the first terminal 111, and a second converter terminal 132. The first DC-DC converter stage 130 may be configured to provide the intermediate DC voltage 135 at the second converter terminal 132 with respect to the first reference terminal 112.

The first DC-DC converter stage 130 does not require galvanic isolation.

The second DC-DC converter stage 150 comprises the following: A first converter terminal 151 connected to the first terminal 111; a second converter terminal 152 connected to the second converter terminal 132 of the first DC-DC converter stage 130; a third converter terminal 153 connected to the second terminal 121; a fourth converter terminal 158 connected to the first reference terminal 112; and a fifth converter terminal 159 connected to the second reference terminal 122.

The second DC-DC converter stage 150 is configured to provide the second DC voltage 123 between the third converter terminal 153 and the second reference terminal 122.

The DC-DC converter arrangement may further comprise an optional low-pass filter 170 coupled between the first terminal 111 and the second DC-DC converter stage 150. The low-pass filter 170 is configured to suppress current harmonics of the photo-voltaic panel 110.

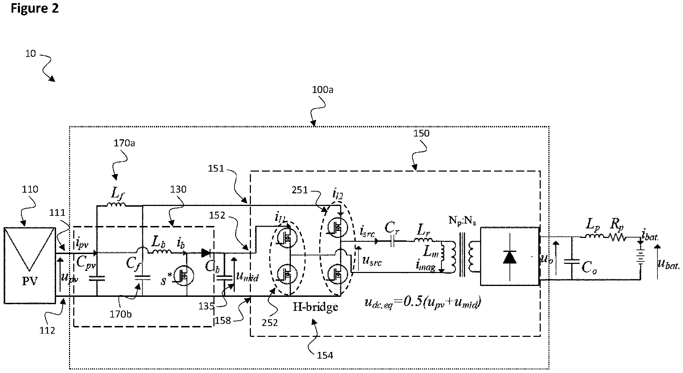

The second DC-DC converter stage 150 comprises a full-bridge inverter 154. The full-bridge inverter 154 may comprise a first inverter leg 251 connected between the first converter terminal 151 and the fourth converter terminal 158; and a second inverter leg 252 connected between the second converter terminal 152 and the fourth converter terminal 158, e.g., as shown in Figures 2 to 5.

The full-bridge inverter 154 may comprise a rectifier 156 connected to the second terminal 121 and to the second reference terminal 122.

The second DC-DC converter stage 150 may be configured to combine the first DC voltage 113 and the intermediate DC voltage 135 for conversion into the second DC voltage 123.

The first DC-DC converter stage 130 may comprise at least one DC-DC converter of any family, in particular a buck-converter, a boost-converter or a buck-boost converter as shown in Figures 2 to 5, for example, for conversion of the first DC voltage 113.

The DC-DC converter arrangement 100 may comprise a controller 160 configured to provide a respective control signal 161, 162, 163, 164 for controlling the first DC-DC converter stage 130 and the second DC-DC converter stage 150.

The controller 160 may be configured to control the first DC-DC converter stage 130 based on a Maximum Power Point Tracking scheme.

The second DC-DC converter stage 150 may comprise a transformer 155 comprising a primary side 155a and a secondary side 155b. The primary side 155a of the transformer 155 may be coupled to the full-bridge inverter 154 and the secondary side 155b of the transformer 155 may be coupled to the rectifier 156.

The second DC-DC converter stage 150 may comprise a resonant converter.

The second DC-DC converter stage 150 may comprise a primary resonant tank 157a coupled between the full-bridge inverter 154 and the primary side 155a of the transformer 155.

The second DC-DC converter stage 150 may optionally comprise a secondary resonant tank 157b coupled between the secondary side 155b of the transformer 155 and the rectifier 156.

The full-bridge inverter 154 may be configured to operate at a fixed duty cycle and at a fixed frequency corresponding to a resonant frequency of the primary resonant tank 157a.

The DC-DC converter arrangement 100 further comprises an energy storage 140 coupled to the first DC-DC converter stage 130. The energy storage 140 is configured to store energy based on the intermediate DC voltage 135. The energy stored in the energy storage 140 corresponds to a partial power provided by the photo-voltaic panel 110.

The energy storage 140 may comprise a second battery for the electric vehicle. This second battery can have a lower nominal voltage than a nominal voltage of the battery 120.

The second battery can be a LV battery with a voltage below 25 V, for example while the main battery 120 can be a HV battery with a voltage between 400 V and 800 V, for example.

In the following, the photo-voltaic charging system 10 is described in more detail.

The photo-voltaic charging system 10 shown in Figure 1 comprises a PV panel/array 110, an optional high-frequency filter 170, a non-isolated DC-DC converter, also referred to as the first DC-DC converter stage 130, a full-bridge converter, also referred to as full bridge inverter 154, a resonant converter (including transformer 155 with primary resonant tank 157a and optional secondary resonant tank 157b) and a rectifier 156.

The low-pass (high-frequency) filter 170 is optional, but it helps to reduce the current harmonics seen at the point of interconnection with the PV panel 110. While one of the legs of the Full-bridge inverter 154 is connected to the PV panel 110 through the filter 170, the other leg is connected directly to the output of the non-isolated DC-DC converter 130. Any non-isolated converter (buck, boost, or a buck-boost) can be used for this purpose.

The output of the non-isolated converter 130 may be connected to the (optional) LV-battery 140 via an interfacing circuit. The interfacing circuit comprises elements such as switches, fuses, relays, or etc. which are required for the safe interconnection of the EV's LV-battery 140. The resonant converter is formed by a full-bridge inverter 154, a rectifier stage 156, a primary resonant tank 157a, a high-frequency transformer 155 and, in some cases, an optional secondary resonant tank 157b.

Thus, the resonant converter can be of any kind: series, series-parallel, parallel-parallel, etc. A series resonant converter (SRC) is the most recommended option and it will be explained in the next sections. However, it is important to stress that other resonant topologies can be also used. For the rectifier stage, active or passive topologies can be both used in either full-bridge or half-bridge arrangements.

A controller 160 is also part of the system 10. The controller 160 ensures the proper behavior of the system 10 and it is in charge of the MPPT tracking, voltage/current regulation, and LV/HV battery selection, etc.

In the following, the full-Bridge Series Resonant Converter (SRC) is described. The full-bridge operates at a fixed duty-cycle (50%) and at fixed frequency equal to the resonant frequency of the tank formed by Cr and Lr as shown in Figures 2 to 5, for example. The operation at constant frequency and fixed duty-cycle is optimum for the SRC converter as it ensures minimum switching losses, zero voltage switching (ZVS), and reduced transformer size. Moreover, since the frequency is constant, the SRC can operate with a low quality factor (Q). This enhances the power density and efficiency of the system 10.

The full-bridge imposes a square voltage waveform across the resonant tank and transformer. The equivalent peak amplitude of the voltage waveform is given by: ${u}_{dq , eq} = \left({u}_{pv}+{u}_{mid}\right) / 2$ where *u_{mid}* is the output voltage of the non-isolated DC-DC stage. Consequently, the output voltage after the rectification stage is given by: ${u}_{o} = \frac{{N}_{s}}{{N}_{p}} \times \left({u}_{pv}+{u}_{mid}\right) / 2$ where *Nₚ* and *Nₛ* are the number of turns of the primary and secondary, respectively. It is worth nothing that the SRC operates in open-loop and does not performed any regulation function.

In the following, the non-isolated stage (i.e., the first converter stage 130) is described.

The non-isolated stage can be any DC-DC converter such as a boost, buck, 4-switch buck-boost, or the 2-switch synchronous buck-boost as shown in Figures 2 to 5. The selection of the best topology depends on the specific design-case as well as the required percentage of power processed by the non-isolated stage. This percentage is proportional to the ratio between *u_{mid}* and *uₚᵥ* as shown below: $PP \left[%\right] = 100 \times \frac{{u}_{mid}}{{u}_{mid} + {u}_{pv}}$

Thus, for a boost converter, the partial power will vary from 50% to 100% depending on the voltage regulation range. For a buck converter, this value is between 0% and 50%. Similarly, a buck-boost converter will have the largest range from 0% to 100%.

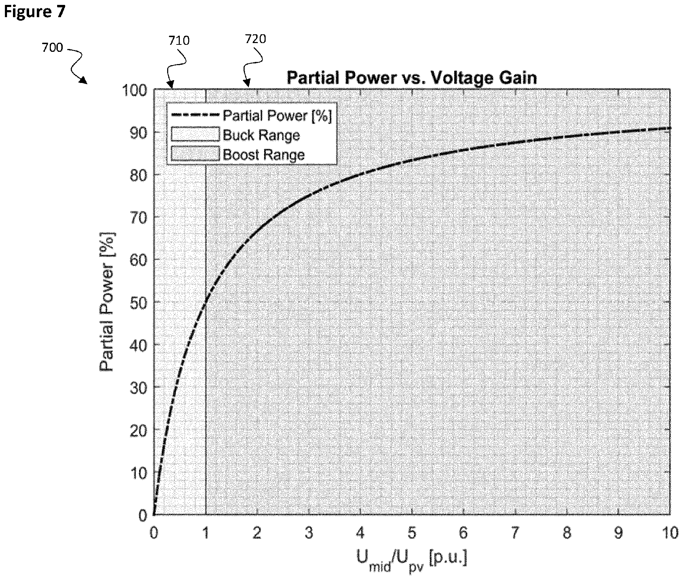

In Figure 7, partial power is depicted as a function of the voltage gain of the non-isolated DC-DC converter as described above. The buck range 710 is below the threshold $\frac{{u}_{mid}}{{u}_{pv}} = 1$, while the boost range 720 is above the threshold $\frac{{u}_{mid}}{{u}_{pv}} = 1$.

Figures 2 to 5 show the system 10 with different converter topologies (embodiments) used as the non-isolated DC-DC stage. All embodiments are based on the main structure shown in Figure 1 in terms of its main blocks.

To summarize, the system 10 comprises a PV solar-roof 110 connected to a DC-DC-converter 130 which feeds energy to the HV battery 120 and/or the low voltage battery 140 of the EV. One of the legs of the Full-bridge converter 154 is connected to the PV panel 110. A filter 170 can be optionally placed in between to reduce the harmonic content at the input of the system 10. The other leg of the Full-bridge converter 154 is connected to a non-isolated converter 130 of any kind (buck, boost, buck-boost, etc., as shown in Figures 2 to 5).

The LV-battery 140 and its interfacing components (fuse, relay, switch, etc.) are interconnected to the output of this converter 130. The resonant converter can be of any kind (series, series-parallel, parallel-parallel, etc.); however, a series resonant converter (SRC) is the most recommended option. The resonant converter can operate in open-loop at a fixed frequency determined by the resonant tank (i.e., Lr and Cr for a SRC). The resonant converter can be designed with a low-quality factor since the frequency of operation is constant. The transformer 155 can be also optimized for operation at a constant frequency. An active/passive full/half-bridge stage 156 is used at the secondary side of the transformer 155 to rectify the voltage fed to the HV battery 120.

The system 10 can provide energy to the HV battery 120 or the LV battery 140 singly. Simultaneously charging of the LV 140 and HV battery 120 is possible if the resonant converter (i.e., SRC) is actively controlled (closed-loop). This operation is however not recommended as it incurs in higher power-losses.

Figure 2 shows a circuit diagram of a photo-voltaic charging system 10 with a DC-DC converter arrangement 100a according a first embodiment. The non-isolated stage, i.e., the first DC-DC converter stage 130, is implemented as a boost-converter.

The DC-DC converter arrangement 100a corresponds to the DC-DC converter arrangement 100 described above with respect to Figure 1, but in Figure 2 more details of the DC-DC converter arrangement 100 are shown and in this first embodiment, the first DC-DC converter stage 130 is implemented as a boost-converter.

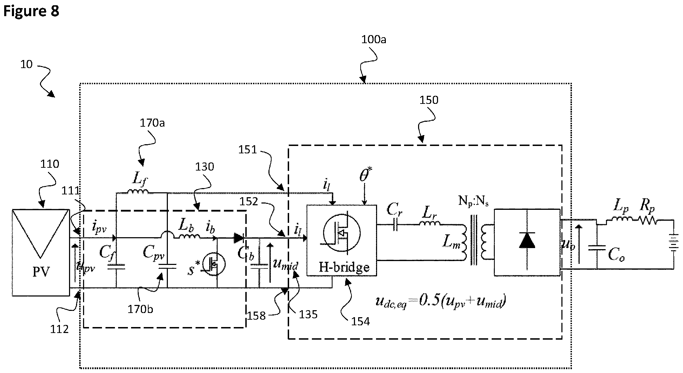

The first DC-DC converter stage 130, i.e., the non-isolated converter 130 comprises an inductor *L_{b}*, a diode and a transistor forming the boost-converter. The transistor is controlled by a control signal S*. The control signal S* may be controlled by the controller 160 as described above with respect to Figure 1, for example by an MPPT scheme as described below with respect to Figures 8 to 13d.

The energy storage 140 corresponding to the low-voltage battery is implemented by a capacitor *C_{b}* coupled to the first DC-DC converter stage 130. The capacitor *C_{b}* is connected between the second converter terminal 152 and the fourth converter terminal 158.

The energy storage 140 is configured to store energy based on the intermediate DC voltage *u_{mid}*, 135. The energy stored in the energy storage 140 corresponds to a partial power provided by the photo-voltaic panel 110.

The second DC-DC converter stage 150 comprises a full-bridge inverter 154. The full-bridge inverter 154 comprises a first inverter leg 251 connected between the first converter terminal 151 and the fourth converter terminal 158; and a second inverter leg 252 connected between the second converter terminal 152 and the fourth converter terminal 158.

The DC-DC converter arrangement 10 comprises an optional low-pass filter 170 with filter inductance 170a and filter capacitance 170b. The low-pass filter inductance *L_{f}* 170a is coupled between the first terminal 111 and the first converter terminal 151 of the second DC-DC converter stage 150. The low-pass filter capacitance *C_{f}* 170b is coupled between the first converter terminal 151 and the fourth converter terminal 158 of the second DC-DC converter stage 150. The low-pass filter 170a, 170b is configured to suppress current harmonics of the photo-voltaic panel 110.

The first terminal 111 and the first reference terminal 112 are coupled by a capacitance *Cₚᵥ*.

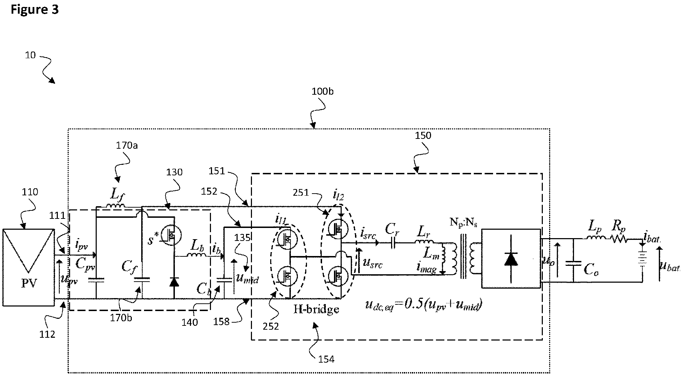

Figure 3 shows a circuit diagram of a photo-voltaic charging system 10 with a DC-DC converter arrangement 100b according a second embodiment. The non-isolated stage, i.e., the first DC-DC converter stage 130, is implemented as a buck-converter.

The DC-DC converter arrangement 100b corresponds to the DC-DC converter arrangement 100 described above with respect to Figure 1, but in Figure 3 more details of the DC-DC converter arrangement 100 are shown and in this second embodiment, the first DC-DC converter stage 130 is implemented as a buck-converter.

The first DC-DC converter stage 130, i.e., the non-isolated converter 130 comprises an inductor *L_{b}*, a diode and a transistor forming the buck-converter. The transistor is controlled by a control signal S*. The control signal S* may be controlled by the controller 160 as described above with respect to Figure 1, for example by an MPPT scheme as described below with respect to Figures 8 to 13d.

The energy storage 140 corresponding to the low-voltage battery is implemented by a capacitor *C_{b}* coupled to the first DC-DC converter stage 130. The capacitor *C_{b}* is connected between the second converter terminal 152 and the fourth converter terminal 158.

The energy storage 140 is configured to store energy based on the intermediate DC voltage *u_{mid}*, 135. The energy stored in the energy storage 140 corresponds to a partial power provided by the photo-voltaic panel 110.

The second DC-DC converter stage 150 comprises a full-bridge inverter 154. The full-bridge inverter 154 comprises a first inverter leg 251 connected between the first converter terminal 151 and the fourth converter terminal 158; and a second inverter leg 252 connected between the second converter terminal 152 and the fourth converter terminal 158.

As described above with respect to Figure 2, the DC-DC converter arrangement 10 comprises an optional low-pass filter 170 with filter inductance 170a and filter capacitance 170b. The low-pass filter inductance *L_{f}* 170a is coupled between the first terminal 111 and the first converter terminal 151 of the second DC-DC converter stage 150. The low-pass filter capacitance *C_{f}* 170b is coupled between the first converter terminal 151 and the fourth converter terminal 158 of the second DC-DC converter stage 150. The low-pass filter 170a, 170b is configured to suppress current harmonics of the photo-voltaic panel 110.

The first terminal 111 and the first reference terminal 112 are coupled by a capacitance *Cₚᵥ*.

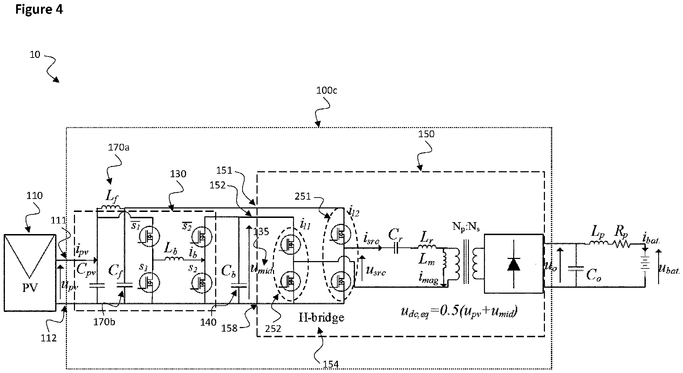

Figure 4 shows a circuit diagram of a photo-voltaic charging system 10 with a DC-DC converter arrangement 100c according a third embodiment. The non-isolated stage, i.e., the first DC-DC converter stage 130, is implemented as a 4-switch synchronous buck-boost-converter.

The DC-DC converter arrangement 100c corresponds to the DC-DC converter arrangement 100 described above with respect to Figure 1, but in Figure 4 more details of the DC-DC converter arrangement 100 are shown and in this third embodiment, the first DC-DC converter stage 130 is implemented as a 4-switch synchronous buck-boost converter.

The first DC-DC converter stage 130, i.e., the non-isolated converter 130 comprises a full bridge with four switches (e.g., transistors) forming the elements of the full bridge and inductor *L_{b}*, arranged between both legs of the full bridge. The four switches and the inductor *L_{b}* are forming the 4-switch synchronous buck-boost converter.

The energy storage 140 corresponding to the low-voltage battery is implemented by a capacitor *C_{b}* coupled to the first DC-DC converter stage 130. The capacitor *C_{b}* is connected between the second converter terminal 152 and the fourth converter terminal 158.

The energy storage 140 is configured to store energy based on the intermediate DC voltage *u_{mid}*, 135. The energy stored in the energy storage 140 corresponds to a partial power provided by the photo-voltaic panel 110.

The second DC-DC converter stage 150 comprises a full-bridge inverter 154. The full-bridge inverter 154 comprises a first inverter leg 251 connected between the first converter terminal 151 and the fourth converter terminal 158; and a second inverter leg 252 connected between the second converter terminal 152 and the fourth converter terminal 158.

As described above with respect to Figure 2, the DC-DC converter arrangement 10 comprises an optional low-pass filter 170 with filter inductance 170a and filter capacitance 170b. The low-pass filter inductance *L_{f}* 170a is coupled between the first terminal 111 and the first converter terminal 151 of the second DC-DC converter stage 150. The low-pass filter capacitance *C_{f}* 170b is coupled between the first converter terminal 151 and the fourth converter terminal 158 of the second DC-DC converter stage 150. The low-pass filter 170a, 170b is configured to suppress current harmonics of the photo-voltaic panel 110.

The first terminal 111 and the first reference terminal 112 are coupled by a capacitance *Cₚᵥ*.

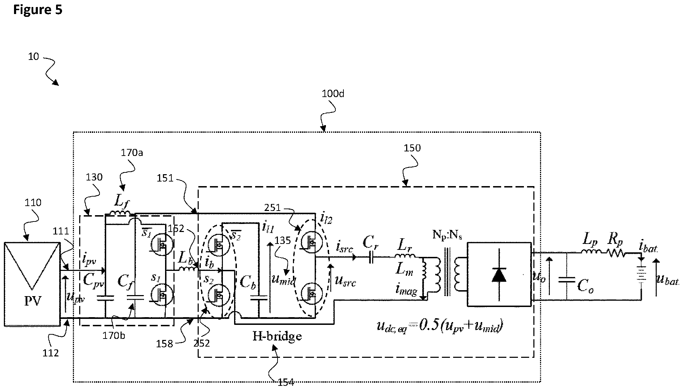

Figure 5 shows a circuit diagram of a photo-voltaic charging system 10 with a DC-DC converter arrangement 100d according a fourth embodiment. The non-isolated stage, i.e., the first DC-DC converter stage 130, is implemented as a 2-switch synchronous buck-boost-converter.

The DC-DC converter arrangement 100d corresponds to the DC-DC converter arrangement 100 described above with respect to Figure 1, but in Figure 5 more details of the DC-DC converter arrangement 100 are shown and in this fourth embodiment, the first DC-DC converter stage 130 is implemented as a 2-switch synchronous buck-boost converter.

The first DC-DC converter stage 130, i.e., the non-isolated converter 130 comprises a half bridge with two switches (e.g., transistors) forming the elements of the half bridge and inductor *L_{b}*, arranged between the two switches of the half bridge. The two switches and the inductor *L_{b}* are forming the 2-switch synchronous buck-boost converter.

The second DC-DC converter stage 150 comprises a full-bridge inverter 154. The full-bridge inverter 154 comprises a first inverter leg 251 connected between the first converter terminal 151 and the fourth converter terminal 158; and a second inverter leg 252 connected to the second converter terminal 152 and to the fourth converter terminal 158.

The energy storage 140 corresponding to the low-voltage battery is implemented by a capacitor *C_{b}* coupled between the first inverter leg 251 and the second inverter leg 252 of the full-bridge inverter 154.

The energy storage 140 is configured to store energy based on the intermediate DC voltage *u_{mid}*, 135. The energy stored in the energy storage 140 corresponds to a partial power provided by the photo-voltaic panel 110.

As described above with respect to Figure 2, the DC-DC converter arrangement 10 comprises an optional low-pass filter 170 with filter inductance 170a and filter capacitance 170b. The low-pass filter inductance *L_{f}* 170a is coupled between the first terminal 111 and the first converter terminal 151 of the second DC-DC converter stage 150. The low-pass filter capacitance *C_{f}* 170b is coupled between the first converter terminal 151 and the fourth converter terminal 158 of the second DC-DC converter stage 150. The low-pass filter 170a, 170b is configured to suppress current harmonics of the photo-voltaic panel 110.

The first terminal 111 and the first reference terminal 112 are coupled by a capacitance *Cₚᵥ*.

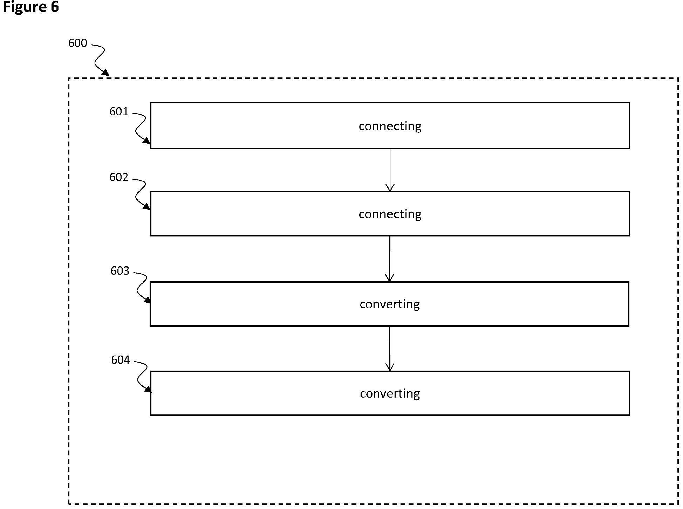

Figure 6 shows a schematic diagram illustrating a method 600 for interconnecting a PV panel 110 to a battery 120 for an electric vehicle by using a direct current to direct current, DC-DC, converter arrangement 100 as described above with respect to Figure 1, comprising a first terminal 111, a second terminal 121, a first DC-DC converter stage 130, and a second DC-DC converter stage 150, as shown in Figure 1.

The method 600 comprises connecting 601 the photo-voltaic panel 110 to the first terminal 111 for providing a first DC voltage 113 at the first terminal 111, e.g., as described above with respect to Figure 1.

The method 600 comprises connecting 602 the battery 120 to the second terminal 121 for providing a second DC voltage 123 at the second terminal 121, e.g., as described above with respect to Figure 1.

The method 600 comprises converting 603 the first DC voltage 113 into an intermediate DC voltage 135 by the first DC-DC converter stage 130, e.g., as described above with respect to Figure 1.

The method 600 comprises converting 604 the first DC voltage 113 and the intermediate DC voltage 135 into the second DC voltage 123 by the second DC-DC converter stage 150 for loading the battery 120 with a full power provided by the photo-voltaic panel 110, wherein the second DC voltage 122 is galvanically isolated from the first DC voltage 113 and the intermediate DC voltage 135 by the second DC-DC converter stage 150, e.g., as described above with respect to Figure 1.

The method 600 further comprises storing energy in an energy storage 140 of the DC-DC converter arrangement 100 based on the intermediate DC voltage 135, wherein the energy stored in the energy storage 140 corresponds to a partial power provided by the photo-voltaic panel 110, e.g., as described above with respect to Figure 1.

Figure 8 shows a circuit diagram of a photo-voltaic charging system 10 with a DC-DC converter arrangement 100a according the first embodiment. The non-isolated stage, i.e., the first DC-DC converter stage 130, is implemented as a boost-converter.

The DC-DC converter arrangement 100a corresponds to the DC-DC converter arrangement 100 described above with respect to Figures 1 and 2, but in Figure 8 more details of the DC-DC converter arrangement 100 are shown with respect to control of the H-bridge 154 by the controller 160 shown in Figure 1 by an MPPT scheme and in this first embodiment, the first DC-DC converter stage 130 is implemented as a boost-converter.

As described above with respect to Figure 2, the first DC-DC converter stage 130, i.e., the non-isolated converter 130 comprises an inductor *L_{b}*, a diode and a transistor forming the boost-converter. The transistor is controlled by a control signal S*. The control signal S* may be controlled by the controller 160 as described above with respect to Figure 1, for example by an MPPT scheme as described below with respect to Figures 8 to 13d.

The energy storage 140 corresponding to the low-voltage battery is implemented by a capacitor *C_{b}* coupled to the first DC-DC converter stage 130. The capacitor *C_{b}* is connected between the second converter terminal 152 and the fourth converter terminal 158.

The energy storage 140 is configured to store energy based on the intermediate DC voltage *u_{mid}*, 135. The energy stored in the energy storage 140 corresponds to a partial power provided by the photo-voltaic panel 110.

The second DC-DC converter stage 150 comprises an H-bridge inverter 154 as described above with respect to Figure 2. The H-bridge inverter 154 is controlled by a control signal θ*.

The DC-DC converter arrangement 10 comprises an optional low-pass filter 170 as described above with respect to Figure 2.

The first terminal 111 and the first reference terminal 112 are coupled by a capacitance *Cₚᵥ* that is arranged after the optional low-pass filter 170a, 170b.

To describe the MPPT algorithms, an example of the topology with a boost converter as the non-isolated stage is shown in Figure 8.

Different MPPT strategies can be designed for this system. Regarding the MPPT algorithm itself, no special requirement exists; thus, it can be any of the algorithms available in literature such as hill-climb, incremental conductance, etc. The MPPT strategy can act upon different parameters of the system such as the PV-panel parameters or the variables of the non-isolated DC-DC converter as discussed next.

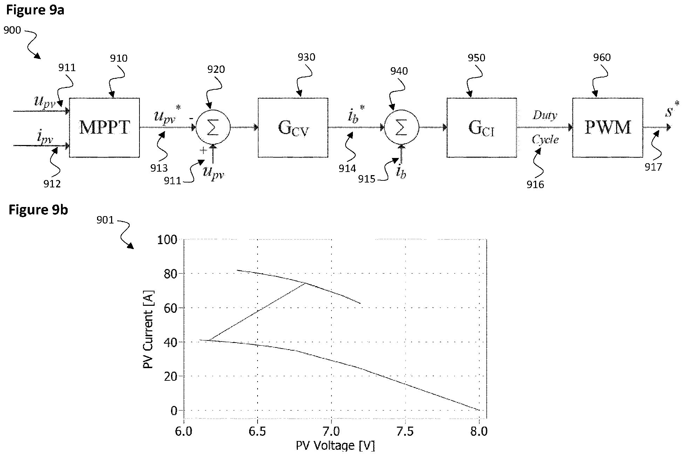

Figure 9a shows an exemplary control diagram of an MPPT scheme 900 applied to the PV-panel voltage.

An MPPT algorithm block 910 receives the PV-panel voltage uₚᵥ 911 and the PV-panel current iₚᵥ 912 as inputs. The relation between the PV-panel voltage uₚᵥ 911 and the PV-panel current iₚᵥ 912 is shown in Figure 9b. The MPPT algorithm block 910 determines a controlled PV-panel voltage uₚᵥ* 913 at its output that is subtracted from the PV-panel voltage uₚᵥ 911 using a subtraction unit 920. The output of the subtraction unit 920 is filtered by a filter G_{CV} 930 to obtain a controlled inductor current i_{b}* 914 which is added by inductor current i_{b} 915 by an adding unit 940. The inductor current i_{b} 915 may correspond to the inductor current i_{b} created by the boost converter shown in Figure 2.

The output of the adding unit 940 is filtered by a filter G_{Cl} 950 to obtain the duty cycle 916 for controlling the pulse width modulation block 960 that provides the control signal s* 917 for controlling the transistor of the boost converter shown in Figure 2.

The output of the MPPT algorithm 910 can be the (controlled) PV-panel voltage as shown in Figure 9a. In this case, this voltage can be controlled with a nested loop with an inner current loop regulating the inductor current *i_{b}* as described above.

The relationship between the PV-panel voltage and the inductor current *i_{b}* is inverse, hence the inverse signs (-+) in the first summation, i.e. subtraction unit 920.

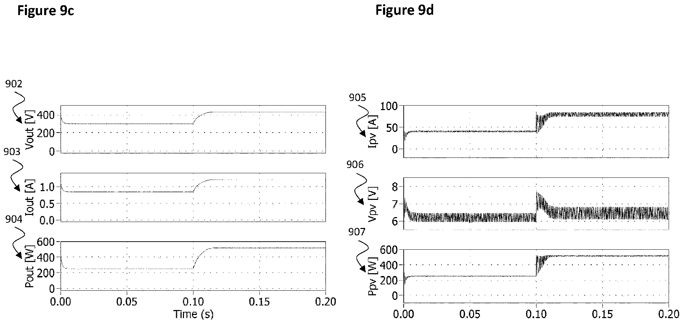

The following figures 9c and 9d show the performance of the MPPT tracker in response to a change in the irradiance level which happens at time 0.10s. Figure 9c shows diagrams for output voltage 902, output current 903 and output power 904. Figure 9d shows diagrams for PV-panel current 905, PV-panel voltage 906 and PV-panel power 907. The system is capable of effectively tracking the MPPT point and it is robust to changes in the load.

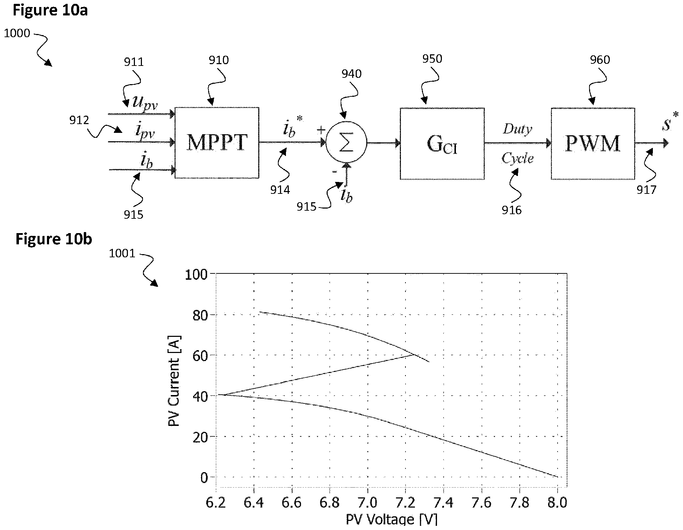

Alternatively, the MPPT algorithm can dictate the reference inductor-current directly (boost converter current) as shown in Figure 10a.

The MPPT algorithm block 910 receives the PV-panel voltage uₚᵥ 911, the PV-panel current iₚᵥ 912 and the inductor current i_{b} 915 as inputs. The relation between the PV-panel voltage uₚᵥ 911 and the PV-panel current iₚᵥ 912 is shown in Figure 10b. The MPPT algorithm block 910 determines a controlled inductor current i_{b}* 914 at its output that is subtracted from the inductor current i_{b} 915 using a subtraction unit 920. The output of the subtraction unit 920 is filtered by a filter G_{Cl} 950 to obtain the duty cycle 916 for controlling the pulse width modulation block 960 that provides the control signal s* 917 for controlling the transistor of the boost converter shown in Figure 2.

Even though the current from the PV-system is not the same as the current in the non-isolated DC-DC converter, they are proportional. Thus, it is possible to design an MPPT strategy that regulates the inductor current to find the MPPT point. PV current-based MPPT tracking algorithms are not unusual to PV systems and require a single control-loop.

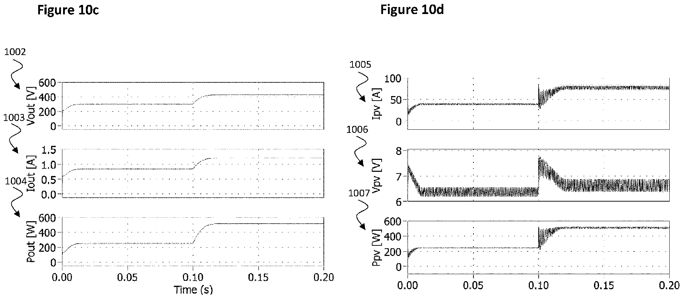

Figures 10c and 10d show the performance of the MPPT tracker to a change in the irradiance level which happens at time 0.10s. Figure 10c shows diagrams for output voltage 1002, output current 1003 and output power 1004. Figure 10d shows diagrams for PV-panel current 1005, PV-panel voltage 1006 and PV-panel power 1007. The system is capable of tracking effectively the MPPT point of the system with an adequate dynamic response.

Although the previous methods can both track the maximum power point, they do not control directly the output voltage *u₀* nor the intermediate voltage *u_{mid}* (output of the non-isolated DC-DC converter).

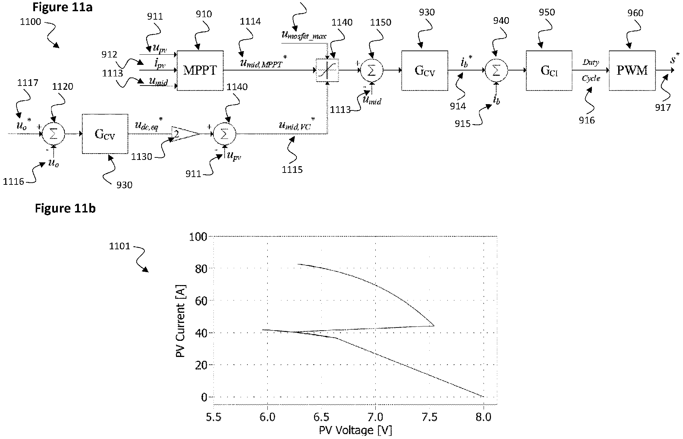

Thus, an alternative strategy that acts on *u_{mid}* can be designed as shown in Figure 11a. This voltage is controlled with a nested current loop acting on the inductor current. The relationship between this current and *u_{mid}* is direct.

The MPPT algorithm block 910 receives the PV-panel voltage uₚᵥ 911, the PV-panel current iₚᵥ 912 and the intermediate voltage *u_{mid}* 1113 as inputs. The relation between the PV-panel voltage uₚᵥ 911 and the PV-panel current iₚᵥ 912 is shown in Figure 11b. The MPPT algorithm block 910 determines a controlled intermediate voltage *u_{mid}* 1114 at its output that is provided to threshold comparison unit 1140 having a first voltage 1115 as first threshold and a second voltage 1141 as second threshold. The output of the threshold comparison unit 1140 is subtracted from the intermediate voltage *u_{mid}* 1113 using a subtraction unit 1150. The output of the subtraction unit 1150 is filtered by a filter G_{CV} 930 to obtain a controlled inductor current i_{b}* 914 which is added by inductor current i_{b} 915 by an adding unit 940. The inductor current i_{b} 915 may correspond to the inductor current i_{b} created by the boost converter shown in Figure 2.

The output of the adding unit 940 is filtered by a filter G_{CI} 950 to obtain the duty cycle 916 for controlling the pulse width modulation block 960 that provides the control signal s* 917 for controlling the transistor of the boost converter shown in Figure 2.

The functionality of the threshold comparison unit 1140 with its first voltage 1115 as first threshold and its second voltage 1141 as second threshold is described in the following.

If a full-power converter stage was used between the panel and the resonant converter, controlling the output voltage of the converter can lead to instabilities. This is because the MPPT algorithm can command an unfeasible value of *u_{mid}* in its search for the MPPT point. In that case, the current/voltage control would saturate at a duty cycle of 1, leading to a shorting of the PV panel. For the disclosed solution, however, the uncontrolled leg prevents this from happening.

To illustrate this, one can consider the case of a constant load. The power transferred to the load is proportional to *u_{dq,eq}* = (*uₚᵥ* + *u_{mid}*)/2. Before the MPPT point, any increment in *u_{mid}* translates into higher *u_{dq,eq}* and power transfer. After the MPPT point, any increment in *u_{mid}* must result in a lower power transfer. Thus, if *u_{mid}* is increased over the MPPT point, *u_{dc,eq}* decreases (lower PV voltage *uₚᵥ*). This ensures the stability of the system.

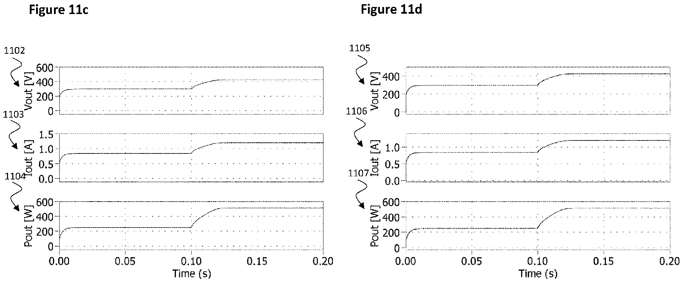

One of the advantages of this MPPT strategy is the option of controlling the middle-capacitor voltage as well as the output voltage. Having control over *u_{mid}* ensures that the MOSFET limits are not exceeded. Moreover, it facilitates the charging of the EV battery during the constant-voltage charging region. This is shown in Figures 11c and 11d, where the power output is curtailed despite the increment in irradiance at time 0.10 s.

Figure 11c shows diagrams for output voltage 1102, output current 1103 and output power 1104. Figure 11d shows diagrams for output voltage 1102, output current 1103 and output power 1104. The system is capable of tracking effectively the MPPT point of the system with an adequate dynamic response.

This MPPT strategy works well for fixed, known or slow changing loads. If the load changes rapidly, the changes in voltage cause by the load variation can be interpreted as irradiance variation and make the system lose stability or opt for an erroneous MPPT point.

Another advantage of this topology in the context of MPPT operation is that, under a fixed load condition, ( *uₚᵥ* + *u_{mid}*)/2 is proportional to the output power. This feature can also be used for identifying the maximum power operating point without having to measure or calculate the PV output power.

For example, a method can be used for providing a control signal 161, 162, 163, 164 as shown in Figure 1 for controlling the DC-DC converter arrangement 100 shown in Figure 1 and described above.

Such a method comprises the following: determining the first DC voltage 113 and the intermediate DC voltage 135 of the DC-DC converter arrangement 100, e.g. as shown and described above with respect to Figure 1; applying a Maximum Power Point Tracking, MPPT, scheme based on a predetermined relationship of the first DC voltage 113 and the intermediate DC voltage 135, wherein the predetermined relationship of the first DC voltage 113 and the intermediate DC voltage 135 is based on a proportionality of an average voltage between the first DC voltage 113 and the intermediate DC voltage 135 with an output power of the photo-voltaic panel 110; and providing the control signal 161, 162, 163, 164 as shown in Figure 1 for controlling the first DC-DC converter stage 130 based on the MPPT scheme.

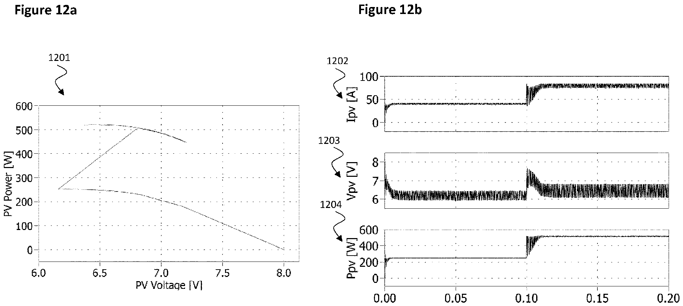

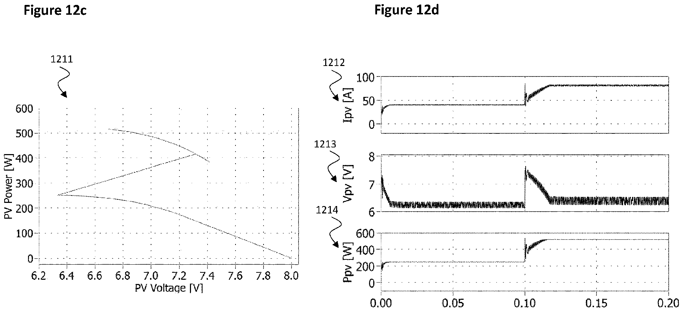

The low-pass filter Lf/Cf (i.e., filter 170 according to Figure 1 and filters 170a, 170b shown in Figures 2 to 5) is optional for the operation of the system; however, it has the function of reducing the current harmonic content seen at the PV panel output (capacitor). The impact of the filter on the MPPT can be seen in Figures 12a, 12b, 12c and 12d.

The relation between the PV-panel power and the PV-panel voltage uₚᵥ is shown in Figures 12a and 12c. Figure 12b shows the performance of the photo-voltaic charging system 10 without input filtering and Figure 12d shows the performance of the photo-voltaic charging system 10 with input filtering.

Figure 12b shows diagrams for PV-panel current 1202, PV-panel voltage 1203 and PV-panel power 1204 without filtering. Figure 12d shows diagrams for PV-panel current 1212, PV-panel voltage 1213 and PV-panel power 1214 with filtering.

The filter reduces the bandwidth of the MPPT controller slowing down the MPPT tracking response; however, it also reduces the current/voltage ripple at the input of the system for a given input capacitor. The selection of the adequate filter depends on the EMC requirements and optimum sizing of the overall system.

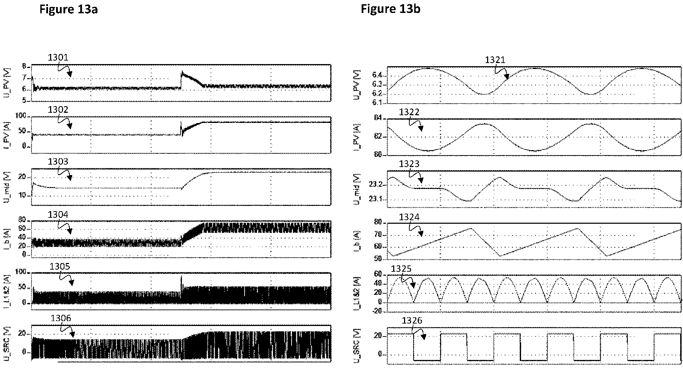

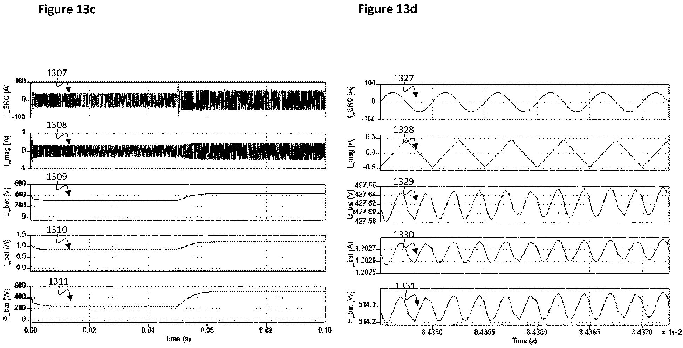

Figures 13a, 13b, 13c and 13d show current and voltage waveforms for different points within the DC-DC converter arrangement 100a. The figures 13a, 13b, 13c and 13d show typical current and voltage waveforms of the disclosed solution considering a boost-converter as the non-isolated stage, i.e., according to the DC-DC converter arrangement 100a shown in Figures 2 and 8.

The figures depict the current and voltage waveforms for different points within the circuit for an exemplary case. A change of irradiance takes place at t=0.05s. The MPPT tracker changes the PV operation point to extract maximum power. These curves correspond to a boost-converter; however, similar curves are expected if other topologies are used as non-isolated converters.

On the right side, i.e. in Figures 13b and 13d, a zoomed view is shown.

The figures show PV-panel voltage U_PV 1301, 1321, PV-panel current I_PV 1302, 1322, intermediate voltage U_mid 1303, 1323, inductor current I_b 1304, 1324, current via L1 and L2 I_L1&2 1305, 1325, source voltage U_SRC 1306, 1326, source current I_SRC 1307, 1327, I_mag 1308, 1328, battery voltage U_bat 1309, 1329, battery current I_bat 1310, 1330 and battery power P_bat 1311, 1321.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A direct-current to direct-current, DC-DC, converter arrangement (100) for interconnecting a photo-voltaic panel (110) to a battery (120) for an electric vehicle, the DC-DC converter arrangement (100) comprising:
a first terminal (111) for connecting the DC-DC converter arrangement (100) to the photo-voltaic panel (110), the first terminal (111) being configured to provide a first DC voltage (113);
a second terminal (121) for connecting the DC-DC converter arrangement (100) to the battery (120), the second terminal (121) being configured to provide a second DC voltage (123);
a first DC-DC converter stage (130) configured to convert the first DC voltage (113) into an intermediate DC voltage (135), wherein the first DC-DC converter stage is a non-isolated converter; and
a second DC-DC converter stage (150) configured to convert the first DC voltage (113) and the intermediate DC voltage (135) into the second DC voltage (123) for loading the battery (120) with a full power provided by the photo-voltaic panel (110),
wherein the second DC-DC converter stage (150) is configured to galvanically isolate the second DC voltage (123) from the first DC voltage (113) and the intermediate DC voltage (135);
wherein the first terminal (111) is configured to provide the first DC voltage (113) with respect to a first reference terminal (112);
wherein the second terminal (121) is configured to provide the second DC voltage (123) with respect to a second reference terminal (122), the second reference terminal (122) being galvanically isolated from the first reference terminal (112);
wherein the first DC-DC converter stage (130) comprises a first converter terminal (131) connected to the first terminal (111), and a second converter terminal (132), the first DC-DC converter stage (130) being configured to provide the intermediate DC voltage (135) at the second converter terminal (132) with respect to the first reference terminal (112);
wherein the second DC-DC converter stage (150) comprises:
a first converter terminal (151) connected to the first terminal (111);
a second converter terminal (152) connected to the second converter terminal (132) of the first DC-DC converter stage (130);
a third converter terminal (153) connected to the second terminal (121);
a fourth converter terminal (158) connected to the first reference terminal (112); and
a fifth converter terminal (159) connected to the second reference terminal (122),
wherein the second DC-DC converter stage (150) is configured to provide the second DC voltage (123) between the third converter terminal (153) and the second reference terminal (122); and wherein the second DC-DC converter stage (150) comprises:
a full-bridge inverter (154), the full-bridge inverter comprising a first inverter leg (251) connected between the first converter terminal (151) and the fourth converter terminal (158); and a second inverter leg (252) connected between the second converter terminal (152) and the fourth converter terminal (158); and
a rectifier (156) connected to the second terminal (121) and to the second reference terminal (122),
**characterized in that** the DC-DC converter arrangement (100) further comprises an energy storage (140) comprising a second battery for the electric vehicle, the second battery having a lower nominal voltage than a nominal voltage of the battery (120), the energy storage being coupled to the first DC-DC converter stage (130), and the energy storage (140) being configured to store energy based on the intermediate DC voltage (135), wherein the energy stored in the energy storage (140) corresponds to a partial power provided by the photo-voltaic panel (110), and wherein the battery (120), the energy storage (140), and the photo-voltaic panel (110) are parts of the electric vehicle.

2. The DC-DC converter arrangement (100) of claim 1, wherein the second DC-DC converter stage (150) is configured to combine the first DC voltage (113) and the intermediate DC voltage (135) for conversion into the second DC voltage (123).

3. The DC-DC converter arrangement (100) of claim 1 or 2, wherein the first DC-DC converter stage (130) comprises at least one DC-DC converter of any family, in particular a buck-converter, a boost-converter or a buck-boost converter, for conversion of the first DC voltage (113).

4. The DC-DC converter arrangement (100) of any of the preceding claims, comprising:
a controller (160) configured to provide a respective control signal (161, 162, 163, 164) for controlling the first DC-DC converter stage (130) and the second DC-DC converter stage (150).

5. The DC-DC converter arrangement (100) of claim 4,
wherein the controller (160) is configured to control the first DC-DC converter stage (130) based on a Maximum Power Point Tracking scheme.

6. The DC-DC converter arrangement (100) of claim 1, wherein the second DC-DC converter stage (150) comprises:
a transformer (155) comprising a primary side (155a) and a secondary side (155b),
wherein the primary side (155a) of the transformer (155) is coupled to the full-bridge inverter (154) and the secondary side (155b) of the transformer (155) is coupled to the rectifier (156).

7. The DC-DC converter arrangement (100) of claim 6,
wherein the second DC-DC converter stage (150) comprises a resonant converter.

8. The DC-DC converter arrangement (100) of claim 7, wherein the second DC-DC converter stage (150) comprises:
a primary resonant tank (157a) coupled between the full-bridge inverter (154) and the primary side (155a) of the transformer (155).

9. The DC-DC converter arrangement (100) of claim 8,
wherein the full-bridge inverter (154) is configured to operate at a fixed duty cycle and at a fixed frequency corresponding to a resonant frequency of the primary resonant tank (157a).

10. A method (600) for interconnecting a photo-voltaic panel (110) to a battery (120) for an electric vehicle by using a direct current to direct current, DC-DC, converter arrangement (100) comprising a first terminal (111), a second terminal (121), a first DC-DC converter stage (130), and a second DC-DC converter stage (150), the method comprising:
connecting (601) the photo-voltaic panel (110) to the first terminal (111) for providing a first DC voltage (113) at the first terminal (111);
connecting (602) the battery (120) to the second terminal (121) for providing a second DC voltage (123) at the second terminal (121);
converting (603) the first DC voltage (113) into an intermediate DC voltage (135) by the first DC-DC converter stage (130), wherein the first DC-DC converter stage is a non-isolated converter;
converting (604) the first DC voltage (113) and the intermediate DC voltage (135) into the second DC voltage (123) by the second DC-DC converter stage (150) for loading the battery (120) with a full power provided by the photo-voltaic panel (110);
wherein the second DC voltage (122) is galvanically isolated from the first DC voltage (113) and the intermediate DC voltage (135) by the second DC-DC converter stage (150),
wherein the first terminal (111) provides the first DC voltage (113) with respect to a first reference terminal (112);
wherein the second terminal (121) provides the second DC voltage (123) with respect to a second reference terminal (122), the second reference terminal (122) being galvanically isolated from the first reference terminal (112);
wherein the first DC-DC converter stage (130) comprises a first converter terminal (131) connected to the first terminal (111), and a second converter terminal (132), the first DC-DC converter stage (130) providing the intermediate DC voltage (135) at the second converter terminal (132) with respect to the first reference terminal (112);
wherein the second DC-DC converter stage (150) comprises:
a first converter terminal (151) connected to the first terminal (111);
a second converter terminal (152) connected to the second converter terminal (132) of the first DC-DC converter stage (130);
a third converter terminal (153) connected to the second terminal (121);
a fourth converter terminal (158) connected to the first reference terminal (112); and
a fifth converter terminal (159) connected to the second reference terminal (122),
wherein the second DC-DC converter stage (150) provides the second DC voltage (123) between the third converter terminal (153) and the second reference terminal (122); and
wherein the second DC-DC converter stage (150) comprises:
a full-bridge inverter (154), the full-bridge inverter comprising a first inverter leg (251) connected between the first converter terminal (151) and the fourth converter terminal (158); and a second inverter leg (252) connected between the second converter terminal (152) and the fourth converter terminal (158); and
a rectifier (156) connected to the second terminal (121) and to the second reference terminal (122); the method being **characterized by** further comprising:
storing energy in an energy storage of the DC-DC converter arrangement based on the intermediate DC voltage, wherein the energy storage comprises a second battery for the electric vehicle, the second battery having a lower nominal voltage than a nominal voltage of the battery (120), coupled to the first DC-DC converter stage (130), the energy stored in the energy storage corresponds to a partial power provided by the photo-voltaic panel, wherein the battery (120), the energy storage (140), and the photo-voltaic panel (110) are parts of the electric vehicle.

## Patentansprüche

1. Gleichstrom-zu-Gleichstrom-, DC-DC-, Wandleranordnung (100) zum Verbinden eines Photovoltaikpaneels (110) mit einer Batterie (120) für ein Elektrofahrzeug, wobei die DC-DC-Wandleranordnung (100) umfasst:
einen ersten Anschluss (111) zum Verbinden der DC-DC-Wandleranordnung (100) mit dem Photovoltaikpaneel (110), wobei der erste Anschluss (111) konfiguriert ist, um eine erste DC-Spannung (113) bereitzustellen;
einen zweiten Anschluss (121) zum Verbinden der DC-DC-Wandleranordnung (100) mit der Batterie (120), wobei der zweite Anschluss (121) konfiguriert ist, um eine zweite DC-Spannung (123) bereitzustellen;
eine erste DC-DC-Wandlerstufe (130), die konfiguriert ist, um die erste DC-Spannung (113) in eine DC-Zwischenspannung (135) umzuwandeln, wobei die erste DC-DC-Wandlerstufe ein nicht-isolierter Wandler ist; und
eine zweite DC-DC-Wandlerstufe (150), die konfiguriert ist, um die erste DC-Spannung (113) und die DC-Zwischenspannung (135) in die zweite DC-Spannung (123) umzuwandeln, um die Batterie (120) mit einer vom Photovoltaikpaneel (110) bereitgestellten vollen Leistung zu laden,
wobei die zweite DC-DC-Wandlerstufe (150) konfiguriert ist, um die zweite DC-Spannung (123) von der ersten DC-Spannung (113) und der DC-Zwischenspannung (135) galvanisch zu isolieren;
wobei der erste Anschluss (111) konfiguriert ist, um die erste DC-Spannung (113) in Bezug auf einen ersten Referenzanschluss (112) bereitzustellen;
wobei der zweite Anschluss (121) konfiguriert ist, um die zweite DC-Spannung (123) in Bezug auf einen zweiten Referenzanschluss (122) bereitzustellen, wobei der zweite Referenzanschluss (122) vom ersten Referenzanschluss (112) galvanisch isoliert ist;
wobei die erste DC-DC-Wandlerstufe (130) einen ersten Wandleranschluss (131), der mit dem ersten Anschluss (111) verbunden ist, und einen zweiten Wandleranschluss (132) umfasst,
wobei die erste DC-DC-Wandlerstufe (130) konfiguriert ist, um die DC-Zwischenspannung (135) am zweiten Wandleranschluss (132) in Bezug auf den ersten Referenzanschluss (112) bereitzustellen;
wobei die zweite DC-DC-Wandlerstufe (150) umfasst:
einen ersten Wandleranschluss (151), der mit dem ersten Anschluss (111) verbunden ist;
einen zweiten Wandleranschluss (152), der mit dem zweiten Wandleranschluss (132) der ersten DC-DC-Wandlerstufe (130) verbunden ist;
einen dritten Wandleranschluss (153), der mit dem zweiten Anschluss (121) verbunden ist;
einen vierten Wandleranschluss (158), der mit dem ersten Referenzanschluss (112) verbunden ist; und
einen fünften Wandleranschluss (159), der mit dem zweiten Referenzanschluss (122) verbunden ist,
wobei die zweite DC-DC-Wandlerstufe (150) konfiguriert ist, um die zweite DC-Spannung (123) zwischen dem dritten Wandleranschluss (153) und dem zweiten Referenzanschluss (122) bereitzustellen; und wobei die zweite DC-DC-Wandlerstufe (150) umfasst:
einen Vollbrücken-Wechselrichter (154), wobei der Vollbrücken-Wechselrichter einen ersten Wechselrichterzweig (251), der zwischen den ersten Wandleranschluss (151) und den vierten Wandleranschluss (158) geschaltet ist, und einen zweiten Wechselrichterzweig (252), der zwischen den zweiten Wandleranschluss (152) und den vierten Wandleranschluss (158) geschaltet ist, umfasst; und
einen Gleichrichter (156), der mit dem zweiten Anschluss (121) und mit dem zweiten Referenzanschluss (122) verbunden ist, **dadurch gekennzeichnet, dass** die DC-DC-Wandleranordnung (100) ferner einen Energiespeicher (140) umfasst, der eine zweite Batterie für das Elektrofahrzeug umfasst, wobei die zweite Batterie eine niedrigere Nennspannung als eine Nennspannung der Batterie (120) aufweist, wobei der Energiespeicher mit der ersten DC-DC-Wandlerstufe (130) gekoppelt ist und der Energiespeicher (140) konfiguriert ist, um Energie basierend auf der DC-Zwischenspannung (135) zu speichern, wobei die im Energiespeicher (140) gespeicherte Energie einer vom Photovoltaikpaneel (110) bereitgestellten Teilleistung entspricht und wobei die Batterie (120), der Energiespeicher (140) und das Photovoltaikpaneel (110) Teile des Elektrofahrzeugs sind.

2. DC-DC-Wandleranordnung (100) nach Anspruch 1,
wobei die zweite DC-DC-Wandlerstufe (150) konfiguriert ist, um die erste DC-Spannung (113) und die DC-Zwischenspannung (135) für die Umwandlung in die zweite DC-Spannung (123) zu kombinieren.

3. DC-DC-Wandleranordnung (100) nach Anspruch 1 oder 2,
wobei die erste DC-DC-Wandlerstufe (130) mindestens einen DC-DC-Wandler einer beliebigen Familie umfasst, insbesondere einen Tiefsetzsteller (Buck-Converter), einen Hochsetzsteller (Boost-Converter) oder einen Tief-Hochsetzsteller (Buck-Boost-Converter), zur Umwandlung der ersten DC-Spannung (113).

4. DC-DC-Wandleranordnung (100) nach einem der vorhergehenden Ansprüche, umfassend:
eine Steuerung (160), die konfiguriert ist, um ein jeweiliges Steuersignal (161, 162, 163, 164) zum Steuern der ersten DC-DC-Wandlerstufe (130) und der zweiten DC-DC-Wandlerstufe (150) bereitzustellen.

5. DC-DC-Wandleranordnung (100) nach Anspruch 4,
wobei die Steuerung (160) konfiguriert ist, um die erste DC-DC-Wandlerstufe (130) basierend auf einem Maximum-Power-Point-Tracking-Schema zu steuern.

6. DC-DC-Wandleranordnung (100) nach Anspruch 1, wobei die zweite DC-DC-Wandlerstufe (150) umfasst:
einen Transformator (155), umfassend eine Primärseite (155a) und eine Sekundärseite (155b),
wobei die Primärseite (155a) des Transformators (155) mit dem Vollbrücken-Wechselrichter (154) gekoppelt ist und die Sekundärseite (155b) des Transformators (155) mit dem Gleichrichter (156) gekoppelt ist.

7. DC-DC-Wandleranordnung (100) nach Anspruch 6,
wobei die zweite DC-DC-Wandlerstufe (150) einen Resonanzwandler umfasst.

8. DC-DC-Wandleranordnung (100) nach Anspruch 7, wobei die zweite DC-DC-Wandlerstufe (150) umfasst:
einen primären Resonanzkreis (157a), der zwischen den Vollbrücken-Wechselrichter (154) und die Primärseite (155a) des Transformators (155) geschaltet ist.

9. DC-DC-Wandleranordnung (100) nach Anspruch 8,
wobei der Vollbrücken-Wechselrichter (154) konfiguriert ist, um mit einem festen Tastverhältnis und mit einer festen Frequenz zu arbeiten, die einer Resonanzfrequenz des primären Resonanzkreises (157a) entspricht.

10. Verfahren (600) zum Verbinden eines Photovoltaikpaneels (110) mit einer Batterie (120) für ein Elektrofahrzeug unter Verwendung einer Gleichstrom-zu-Gleichstrom-, DC-DC-, Wandleranordnung (100), umfassend einen ersten Anschluss (111), einen zweiten Anschluss (121), eine erste DC-DC-Wandlerstufe (130) und eine zweite DC-DC-Wandlerstufe (150), wobei das Verfahren umfasst:
Verbinden (601) des Photovoltaikpaneels (110) mit dem ersten Anschluss (111) zum Bereitstellen einer ersten DC-Spannung (113) am ersten Anschluss (111);
Verbinden (602) der Batterie (120) mit dem zweiten Anschluss (121) zum Bereitstellen einer zweiten DC-Spannung (123) am zweiten Anschluss (121);
Umwandeln (603) der ersten DC-Spannung (113) in eine DC-Zwischenspannung (135) durch die erste DC-DC-Wandlerstufe (130), wobei die erste DC-DC-Wandlerstufe ein nicht-isolierter Wandler ist;
Umwandeln (604) der ersten DC-Spannung (113) und der DC-Zwischenspannung (135) in die zweite DC-Spannung (123) durch die zweite DC-DC-Wandlerstufe (150) zum Laden der Batterie (120) mit einer vom Photovoltaikpaneel (110) bereitgestellten vollen Leistung;
wobei die zweite DC-Spannung (122) von der ersten DC-Spannung (113) und der DC-Zwischenspannung (135) durch die zweite DC-DC-Wandlerstufe (150) galvanisch isoliert wird,
wobei der erste Anschluss (111) die erste DC-Spannung (113) in Bezug auf einen ersten Referenzanschluss (112) bereitstellt;
wobei der zweite Anschluss (121) die zweite DC-Spannung (123) in Bezug auf einen zweiten Referenzanschluss (122) bereitstellt, wobei der zweite Referenzanschluss (122) vom ersten Referenzanschluss (112) galvanisch isoliert ist;
wobei die erste DC-DC-Wandlerstufe (130) einen ersten Wandleranschluss (131), der mit dem ersten Anschluss (111) verbunden ist, und einen zweiten Wandleranschluss (132) umfasst, wobei die erste DC-DC-Wandlerstufe (130) die DC-Zwischenspannung (135) am zweiten Wandleranschluss (132) in Bezug auf den ersten Referenzanschluss (112) bereitstellt;
wobei die zweite DC-DC-Wandlerstufe (150) umfasst:
einen ersten Wandleranschluss (151), der mit dem ersten Anschluss (111) verbunden ist;
einen zweiten Wandleranschluss (152), der mit dem zweiten Wandleranschluss (132) der ersten DC-DC-Wandlerstufe (130) verbunden ist;
einen dritten Wandleranschluss (153), der mit dem zweiten Anschluss (121) verbunden ist;
einen vierten Wandleranschluss (158), der mit dem ersten Referenzanschluss (112) verbunden ist; und
einen fünften Wandleranschluss (159), der mit dem zweiten Referenzanschluss (122) verbunden ist,
wobei die zweite DC-DC-Wandlerstufe (150) die zweite DC-Spannung (123) zwischen dem dritten Wandleranschluss (153) und dem zweiten Referenzanschluss (122) bereitstellt; und
wobei die zweite DC-DC-Wandlerstufe (150) umfasst:
einen Vollbrücken-Wechselrichter (154), wobei der Vollbrücken-Wechselrichter einen ersten Wechselrichterzweig (251), der zwischen den ersten Wandleranschluss (151) und den vierten Wandleranschluss (158) geschaltet ist, und einen zweiten Wechselrichterzweig (252), der zwischen den zweiten Wandleranschluss (152) und den vierten Wandleranschluss (158) geschaltet ist, umfasst; und
einen Gleichrichter (156), der mit dem zweiten Anschluss (121) und mit dem zweiten Referenzanschluss (122) verbunden ist; wobei das Verfahren **dadurch gekennzeichnet ist, dass** es ferner umfasst:
Speichern von Energie in einem Energiespeicher der DC-DC-Wandleranordnung basierend auf der DC-Zwischenspannung, wobei der Energiespeicher eine zweite Batterie für das Elektrofahrzeug umfasst, wobei die zweite Batterie eine niedrigere Nennspannung als eine Nennspannung der Batterie (120) aufweist und mit der ersten DC-DC-Wandlerstufe (130) gekoppelt ist, wobei die im Energiespeicher gespeicherte Energie einer vom Photovoltaikpaneel bereitgestellten Teilleistung entspricht, wobei die Batterie (120), der Energiespeicher (140) und das Photovoltaikpaneel (110) Teile des Elektrofahrzeugs sind.

## Revendications

1. Agencement de convertisseur courant continu-courant continu (CC-CC) (100) destiné à interconnecter un panneau photovoltaïque (110) à une batterie (120) pour un véhicule électrique, l'agencement de convertisseur CC-CC (100) comprenant :
une première borne (111) pour connecter l'agencement de convertisseur CC-CC (100) au panneau photovoltaïque (110), la première borne (111) étant configurée pour fournir une première tension CC (113) ;
une seconde borne (121) pour connecter l'agencement de convertisseur CC-CC (100) à la batterie (120), la seconde borne (121) étant configurée pour fournir une seconde tension CC (123) ;
un premier étage de convertisseur CC-CC (130) configuré pour convertir la première tension CC (113) en une tension CC intermédiaire (135), dans lequel le premier étage de convertisseur CC-CC est un convertisseur non isolé ; et
un second étage de convertisseur CC-CC (150) configuré pour convertir la première tension CC (113) et la tension CC intermédiaire (135) en la seconde tension CC (123) pour charger la batterie (120) avec une puissance totale fournie par le panneau photovoltaïque (110),
dans lequel le second étage de convertisseur CC-CC (150) est configuré pour isoler galvaniquement la seconde tension CC (123) de la première tension CC (113) et de la tension CC intermédiaire (135) ;
dans lequel la première borne (111) est configurée pour fournir la première tension CC (113) par rapport à une première borne de référence (112) ;
dans lequel la seconde borne (121) est configurée pour fournir la seconde tension CC (123) par rapport à une seconde borne de référence (122), la seconde borne de référence (122) étant isolée galvaniquement de la première borne de référence (112) ;
dans lequel le premier étage de convertisseur CC-CC (130) comprend une première borne de convertisseur (131) connectée à la première borne (111), et une deuxième borne de convertisseur (132), le premier étage de convertisseur CC-CC (130) étant configuré pour fournir la tension CC intermédiaire (135) à la deuxième borne de convertisseur (132) par rapport à la première borne de référence (112) ;
dans lequel le second étage de convertisseur CC-CC (150) comprend :
une première borne de convertisseur (151) connectée à la première borne (111) ;
une deuxième borne de convertisseur (152) connectée à la deuxième borne de convertisseur (132) du premier étage de convertisseur CC-CC (130) ;
une troisième borne de convertisseur (153) connectée à la seconde borne (121) ;
une quatrième borne de convertisseur (158) connectée à la première borne de référence (112) ; et
une cinquième borne de convertisseur (159) connectée à la seconde borne de référence (122),
dans lequel le second étage de convertisseur CC-CC (150) est configuré pour fournir la seconde tension CC (123) entre la troisième borne de convertisseur (153) et la seconde borne de référence (122) ; et dans lequel le second étage de convertisseur CC-CC (150) comprend :
un onduleur en pont complet (154), l'onduleur en pont complet comprenant une première branche d'onduleur (251) connectée entre la première borne de convertisseur (151) et la quatrième borne de convertisseur (158) ; et une seconde branche d'onduleur (252) connectée entre la deuxième borne de convertisseur (152) et la quatrième borne de convertisseur (158) ; et
un redresseur (156) connecté à la seconde borne (121) et à la seconde borne de référence (122), **caractérisé en ce que** l'agencement de convertisseur CC-CC (100) comprend en outre un stockage d'énergie (140) comprenant une seconde batterie pour le véhicule électrique, la seconde batterie ayant une tension nominale inférieure à une tension nominale de la batterie (120), le système de stockage d'énergie étant couplé au premier étage de convertisseur CC-CC (130), et le système de stockage d'énergie (140) étant configuré pour stocker de l'énergie sur la base de la tension CC intermédiaire (135), dans lequel l'énergie stockée dans le stockage d'énergie (140) correspond à une puissance partielle fournie par le panneau photovoltaïque (110), et dans lequel la batterie (120), le stockage d'énergie (140) et le panneau photovoltaïque (110) sont des éléments du véhicule électrique.

2. Agencement de convertisseur CC-CC (100) selon la revendication 1,
dans lequel le second étage de convertisseur CC-CC (150) est configuré pour combiner la première tension CC (113) et la tension CC intermédiaire (135) pour la conversion en la seconde tension CC (123).

3. Agencement de convertisseur CC-CC (100) selon la revendication 1 ou 2,
dans lequel le premier étage de convertisseur CC-CC (130) comprend au moins un convertisseur CC-CC de toute famille, en particulier un convertisseur abaisseur, un convertisseur élévateur ou un convertisseur abaisseur-élévateur, pour la conversion de la première tension CC (113).

4. Agencement de convertisseur CC-CC (100) selon l'une quelconque des revendications précédentes, comprenant :
un dispositif de commande (160) configuré pour fournir un signal de commande respectif (161, 162) pour commander le premier étage de convertisseur CC-CC (130) et le second étage de convertisseur CC-CC (150).

5. Agencement de convertisseur CC-CC (100) selon la revendication 4,
dans lequel le dispositif de commande (160) est configuré pour commander le premier étage de convertisseur CC-CC (130) sur la base d'un schéma de suivi du point de puissance maximale.

6. Agencement de convertisseur CC-CC (100) selon la revendication 1, dans lequel le second étage de convertisseur CC-CC (150) comprend :
un transformateur (155) comprenant un côté primaire (155a) et un côté secondaire (155b),
dans lequel le côté primaire (155a) du transformateur (155) est couplé à l'onduleur en pont complet (154) et le côté secondaire (155b) du transformateur (155) est couplé au redresseur (156).

7. Agencement de convertisseur CC-CC (100) selon la revendication 6,
dans lequel le second étage de convertisseur CC-CC (150) comprend un convertisseur résonant.

8. Agencement de convertisseur CC-CC (100) selon la revendication 7, dans lequel le second étage de convertisseur CC-CC (150) comprend :
un réservoir résonant primaire (157a) couplé entre l'onduleur en pont complet (154) et le côté primaire (155a) du transformateur (155).

9. Agencement de convertisseur CC-CC (100) selon la revendication 8,
dans lequel l'onduleur en pont complet (154) est configuré pour fonctionner à un cycle de service fixe et à une fréquence fixe correspondant à une fréquence de résonance du réservoir résonant primaire (157a).

10. Procédé (600) d'interconnexion d'un panneau photovoltaïque (110) à une batterie (120) pour un véhicule électrique au moyen d'un agencement de convertisseur courant continu-courant continu CC-CC (100) comprenant une première borne (111), une seconde borne (121), un premier étage de convertisseur CC-CC (130) et un second étage de convertisseur CC-CC (150), le procédé comprenant :
la connexion (601) du panneau photovoltaïque (110) à la première borne (111) pour fournir une première tension CC (113) à la première borne (111) ;
la connexion (602) de la batterie (120) à la seconde borne (121) pour fournir une seconde tension CC (123) à la seconde borne (121) ;
la conversion (603) de la première tension CC (113) en une tension CC intermédiaire (135) par le premier étage de convertisseur CC-CC (130), dans lequel le premier étage de convertisseur CC-CC est un convertisseur non isolé ;
la conversion (604) de la première tension CC (113) et de la tension CC intermédiaire (135) en la seconde tension CC (123) par le second étage de convertisseur CC-CC (150) pour charger la batterie (120) avec une puissance totale fournie par le panneau photovoltaïque (110) ;
dans lequel la seconde tension CC (122) est isolée galvaniquement de la première tension CC (113) et de la tension CC intermédiaire (135) par le second étage de convertisseur CC-CC (150),
dans lequel la première borne (111) fournit la première tension CC (113) par rapport à une première borne de référence (112) ;
dans lequel la seconde borne (121) fournit la seconde tension CC (123) par rapport à une seconde borne de référence (122), la seconde borne de référence (122) étant isolée galvaniquement de la première borne de référence (112) ;
dans lequel le premier étage de convertisseur CC-CC (130) comprend une première borne de convertisseur (131) connectée à la première borne (111), et une deuxième borne de convertisseur (132), le premier étage de convertisseur CC-CC (130) fournissant la tension CC intermédiaire (135) à la deuxième borne de convertisseur (132) par rapport à la première borne de référence (112) ;
dans lequel le second étage de convertisseur CC-CC (150) comprend :
une première borne de convertisseur (151) connectée à la première borne (111) ;
une deuxième borne de convertisseur (152) connectée à la deuxième borne de convertisseur (132) du premier étage de convertisseur CC-CC (130) ;
une troisième borne de convertisseur (153) connectée à la seconde borne (121) ;
une quatrième borne de convertisseur (158) connectée à la première borne de référence (112) ; et
une cinquième borne de convertisseur (159) connectée à la seconde borne de référence (122),
dans lequel le second étage de convertisseur CC-CC (150) fournit la seconde tension CC (123) entre la troisième borne de convertisseur (153) et la seconde borne de référence (122) ; et
dans lequel le second étage de convertisseur CC-CC (150) comprend :
un onduleur en pont complet (154), l'onduleur en pont complet comprenant une première branche d'onduleur (251) connectée entre la première borne de convertisseur (151) et la quatrième borne de convertisseur (158) ; et une seconde branche d'onduleur (252) connectée entre la deuxième borne de convertisseur (152) et la quatrième borne de convertisseur (158) ; et
un redresseur (156) connecté à la seconde borne (121) et à la seconde borne de référence (122) ; le procédé étant **caractérisé en ce qu'**il comprend en outre :
le stockage d'énergie dans un stockage d'énergie de l'agencement de convertisseur CC-CC sur la base de la tension CC intermédiaire, dans lequel le stockage d'énergie comprend une seconde batterie pour le véhicule électrique, la seconde batterie ayant une tension nominale inférieure à la tension nominale de la batterie (120), couplée au premier étage de convertisseur CC-CC (130), l'énergie stockée dans le stockage d'énergie correspond à une puissance partielle fournie par le panneau photovoltaïque, dans lequel la batterie (120), le stockage d'énergie (140) et le panneau photovoltaïque (110) sont des parties du véhicule électrique.
